# EUROPÄISCHE PATENTSCHRIFT

(11) **EP 4 244 540 B1**
(45) Veröffentlichungstag und Bekanntmachung des Hinweises auf die Patenterteilung: **09.10.2024**
(21) Anmeldenummer: 21811258.9
(22) Anmeldetag: 12.11.2021
(51) Int. Cl.: F24F 1/04, F24F 13/20, F24F 13/22, F24F 13/02, F24F 13/28, F24F 1/0358, B60H 1/00, F24F 1/022, F24F 130/40

(54) **TRAGBARES KLIMAGERÄT MIT TRANSPORTEINHEIT SOWIE TRANSPORTEINHEIT**
PORTABLE AIR-CONDITIONING DEVICE HAVING A TRANSPORT UNIT, AND TRANSPORT UNIT
DISPOSITIF DE CLIMATISATION PORTABLE DOTÉ D'UNE UNITÉ DE TRANSPORT ET UNITÉ DE TRANSPORT

(30) Priorität: 13.11.2020 DE 102020006967
(43) Veröffentlichungstag der Anmeldung: 20.09.2023
(73) Patentinhaber: Truma Gerätetechnik GmbH & Co. KG, 85640 Putzbrunn (DE)
(72) Erfinder: PLEß, Daniel, 85640 Putzbrunn (DE); VENSCHOTT, Mathias, 85640 Putzbrunn (DE); WICKELMAIER, Peter, 85640 Putzbrunn (DE)
(74) Vertreter: Prinz & Partner mbB
(86) Internationale Anmeldenummer: PCT/EP2021/000142
(87) Internationale Veröffentlichungsnummer: WO 2022/100880

(56) Entgegenhaltungen:
- EP-A2- 2 700 891
- WO-A1-2018/055480
- WO-A1-2018/096598
- KR-B1- 101 901 921

## Beschreibung

Die vorliegende Erfindung betrifft ein tragbares Klimagerät zum Temperieren von Luft mit einer Transporteinheit. Weiterhin bezieht sich die Erfindung auf eine Transporteinheit für ein Klimagerät.

Im Stand der Technik sind Klimaanlagen bekannt, die Räume von Häusern oder beispielsweise von Wohnwagen oder Wohnmobilen temperieren, also kühlen oder erwärmen. Dafür sind die Klimaanlagen an oder auf den Häusern bzw. den Fahrzeugen fest installiert. Weiterhin sind tragbare (alternative Bezeichnung: mobile oder portable) Klimageräte bekannt, die zu einem z. B. zu kühlenden Bereich getragen werden. Diese Klimageräte haben dafür ein geringeres Gewicht und verfügen auch über ein Gehäuse, das nicht unbedingt auf einem Dach oder an einer Wand irreversibel fixiert werden Klimageräte sind beispielsweise aus den Dokumenten WO2018/096598A1, WO2018/055480A1, KR101901921B1 und EP2700891 A2 bekannt.

Die der Erfindung zugrundeliegende Aufgabe besteht darin, ein vorteilhaftes tragbares Klimagerät vorzuschlagen.

Die Erfindung löst die Aufgabe einerseits durch eine Kombination aus einem tragbaren Klimagerät und einer Transporteinheit sowie andererseits durch eine Transporteinheit für ein tragbares Klimagerät.

Die Erfindung löst die Aufgabe durch ein tragbares Klimagerät zum Temperieren von Luft mit einer Transporteinheit, wobei das Klimagerät mindestens ein Gehäuse mit einem Lufteingang und einem Luftausgang aufweist, und wobei das Klimagerät derartig ausgestaltet ist, dass es von dem Lufteingang zu dem Luftausgang geförderte Luft temperiert. Ein Luftausgang ist mit der Transporteinheit reversibel verbindbar, wobei die Transporteinheit thermisch isoliert ist, wobei die Transporteinheit einen Innenraum umschließt, wobei der Innenraum der Transporteinheit durch von der Klimagerät temperierte Luft temperierbar ist, und wobei die Transporteinheit und das Klimagerät derartig ausgestaltet und aufeinander abgestimmt sind, dass das Klimagerät reversibel in die Transporteinheit einbringbar ist. Vorzugsweise unterstützt die Transporteinheit einen Transport des Klimageräts, indem sie das Tragen des eingebrachten Klimageräts erlaubt.

### BESTÄTIGUNGSKOPIE

Erfindungsgemäß kann somit ein Innenraum der Transporteinheit durch die Klimaanlage temperiert werden und die Klimaanlage kann in der Transporteinheit transportiert werden. Es ist bekannt, zum Kühlen von Lebensmitteln Kompressor-Kühlschränke, thermoelektrische Kühlschränke und Absorber-Kühlschränke zu verwenden. Zudem werden teilweise Kühlschränke verwendet, die auf Verdunstungskälte beruhen. Diese Kühlschränke sind gekennzeichnet durch feste Außenabmessungen. Mit einem höherem Aufnahmevermögen für Kühlgut steigen somit auch die Außenabmessungen. Der Vorteil einer mobilen und flexiblen Kühlmöglichkeit, ohne wesentlich mehr Stauraum zu beanspruchen, ergibt sich hier durch eine Kombination aus dem portablen Klimagerät mit einem Behältnis. Das Behältnis wird als Transporteinheit bezeichnet, insofern es den Transport von Objekten in einem Innenraum als auch den Transport des Klimageräts selbst erlaubt. Die Transporteinheit ist vorzugsweise falt-, klapp- oder steckbar und nimmt im zusammengelegten oder ggf. zerlegten Zustand nur ein geringeres Volumen ein. Erfindungsgemäß ist somit vorgesehen, dass die temperierte Ausgangsluft aus dem Klimagerät in einen andockbaren Behälter (also die Transporteinheit) geleitet wird, dessen Innenraum durch diese Luft temperiert (z. B. abgekühlt) wird. Die Transporteinheit ist in einer Ausgestaltung eine Tasche, die vorzugweise thermisch isoliert ist. Dabei ist die Tasche so ausgeführt, dass sie zur Aufbewahrung des Klimageräts dienen kann.

Eine Ausgestaltung sieht vor, dass der Lufteingang des Klimageräts mit der Transporteinheit reversibel verbindbar ist. In dieser Ausgestaltung sind der Luftausgang und der Lufteingang des Klimageräts mit der Transporteinheit verbunden, sodass das Klimagerät der Transporteinheit temperierte Luft zuführt und von der Transporteinheit zu temperierende Luft abführt. Eine alternative oder ergänzende Ausgestaltung beinhaltet, dass in der Transporteinheit mindestens ein Temperatursensor zum Steuern des Klimageräts integriert oder einbringbar ist. Ausgehend von der vom Temperatursensor erfassten Temperatur kann somit in dieser Ausgestaltung das Klimagerät geregelt werden. Eine alternative oder ergänzende Ausgestaltung besteht darin, dass die Transporteinheit mit zwei Schläuchen für das Zu- und Abführen von Luft - vorzugsweise magnetisch - verbindbar ist. Eine alternative oder ergänzende Ausgestaltung beinhaltet, dass die Transporteinheit über eine Komponente verfügt, dass die Komponente als Deckel, Seite oder Boden dient, dass die Komponente den Innenraum der Transporteinheit umfasst, dass die Komponente zumindest teilweise doppelwandig ausgeführt ist, und dass die Komponente über Öffnungen zum Innenraum der Transporteinheit verfügt. Durch die Öffnungen wird in dieser Ausgestaltung die temperierte Luft in den Innenraum eingebracht. Eine ergänzende Ausgestaltung besteht darin, dass die Komponente mit einem Schlauch verbindbar ist. In dieser Ausgestaltung gelangt die temperierte Luft über den Schlauch zu der genannten Komponente und durch die Öffnungen in den Innenraum hinein. Eine alternative oder ergänzende Ausgestaltung beinhaltet, dass der Lufteingang und/oder der Luftausgang des Klimageräts mit einem Schlauch - vorzugsweise magnetisch - lösbar verbindbar (und somit auch reversibel) sind/ist.

Weiterhin löst die Erfindung die Aufgabe durch eine Transporteinheit für ein tragbares Klimagerät, wobei die Transporteinheit thermisch isoliert ist, wobei die Transporteinheit einen Innenraum umschließt, und wobei das Klimagerät reversibel in die Transporteinheit einbringbar ist. Die Transporteinheit kann somit als Kühlraum dienen, indem sie mit dem Klimagerät entsprechend reversibel verbunden wird. Weiterhin kann das Klimagerät in der Transporteinheit transportiert werden.

Die zuvor und im Folgenden diskutierten Ausgestaltungen hinsichtlich der Kombination aus Klimagerät und Transporteinheit gelten entsprechend auch für die Transporteinheit. Umgekehrt gelten die Ausgestaltungen und Diskussionen bezüglich der Transporteinheit auch für die Kombination aus Klimagerät und Transporteinheit.

In einer Ausgestaltung ist an der Transporteinheit ein Schnellverbinder für die Schläuche zur Kontaktierung mit dem Klimagerät vorhanden. In einer Ausgestaltung ist ein Temperatursensor zum Steuern des Klimageräts in der Transporteinheit integriert. In einer Ausgestaltung ist die Transporteinheit eine Kühlbox. In einer Ausgestaltung wird Luft durch die Transporteinheit durchgeleitet, um so zur Kühlung der Umgebung beizutragen. In einer weiteren Ausgestaltung zirkuliert die Luft in der Transporteinheit, um entsprechend tiefere oder höhere Temperaturen zu erzielen. Weiterhin werden in einer Ausgestaltung die beiden vorgenannten Ausführungen abwechselnd oder je nach Bedarf kombiniert. In einer Variante besteht die Transporteinheit aus einem platzsparend verstaubaren Material und/oder die Geometrie erlauben/erlaubt es, dass die Transporteinheit durch den Druck der ausströmenden Luft aufgeblasen wird. In einer Ausgestaltung lassen sich mehrere Transporteinheiten miteinander koppeln, um den zur Verfügung stehenden Stauraum zu vergrößern. In einer Ausgestaltung lässt sich die Dimensionierung des Innenraums der Transporteinheit verändern, indem die Transporteinheit beispielsweise auseinandergezogen wird. In einer Ausgestaltung verfügt die Transporteinheit über eine Komponente, die beispielsweise als Wand, Deckel oder Boden dient und somit auch den Innenraum umfasst. Diese den Innenraum umfassende Komponente ist dabei zumindest teilweise doppelwandig ausgeführt und verfügt über Öffnungen zum Innenraum, um beispielsweise eine bessere Verteilung der temperierten Luft zu gewährleisten.

Eine Ausgestaltung der Transporteinheit sieht vor, dass die Transporteinheit über eine Trägerkonstruktion verfügt. Die Konstruktion ist beispielsweise eine Art von Träger.

Im Einzelnen gibt es eine Vielzahl von Möglichkeiten, das erfindungsgemäße Klimagerät sowie die erfindungsgemäße Transporteinheit auszugestalten und weiterzubilden. Dazu wird verwiesen zusätzlich zu den obigen Erläuterungen auf die folgende Beschreibung von Ausführungsbeispielen in Verbindung mit der Zeichnung. Es zeigen:
- Fig. 1: eine schematische Darstellung eines transportablen Klimageräts,
- Fig. 2: einen Schnitt durch einen Teil einer Ausgestaltung eines Klimageräts mit dem Abschnitt zur Verbindung mit einem Schlauch und einer Zusatzkomponente,
- Fig. 3: eine räumliche Darstellung einer weiteren Ausgestaltung eines Klimageräts mit einem entfernten Kondensatbehälter,
- Fig. 4: zwei Zustände eines Klimageräts in Bezug auf die Positionierung der Abdeckvorrichtung,
- Fig. 5: einen Schnitt durch ein Klimagerät mit einer Ausführung hinsichtlich einer ersten Gestaltung der Steckdosenkonfiguration,
- Fig. 6: einen Schnitt durch eine weitere Gestaltung der Steckdosenkonfiguration,
- Fig. 7: einen Schnitt durch eine schematische Darstellung eines Klimageräts mit seitlich austauschbaren Komponenten für die Umschaltung von Heizen und Kühlen,
- Fig. 8: eine räumliche Darstellung einer Anordnung mit einem Trockenraum und einem Klimagerät,
- Fig. 9: eine räumliche Darstellung von zwei Ausgestaltungen einer Transporteinheit und
- Fig. 10: eine räumliche Darstellung einer weiteren Ausgestaltung des Klimageräts.

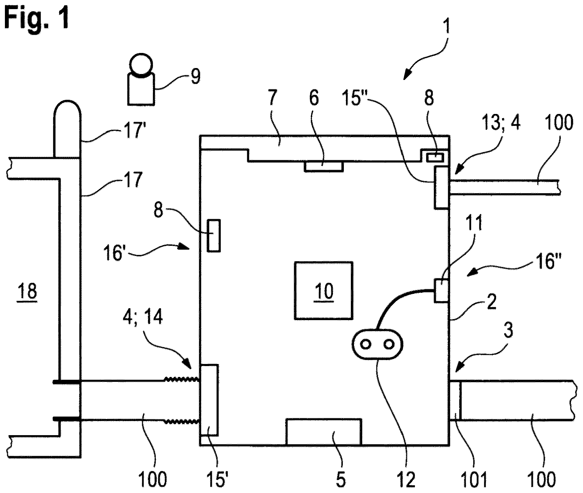

Die Fig. 1 zeigt schematisch den Aufbau eines Klimageräts 1 zum Temperieren - entweder Kühlen oder Erwärmen - von Luft. Hierfür gibt es mindestens einen Lufteingang 3, dem z. B. die Raumluft zugeführt wird und zwei Luftausgänge 4. Die beiden Luftausgänge 4 sind zum einen ein Kaltluftausgang 14 und ein Warmluftausgang 13. Über den Kaltluftausgang 14 wird die gekühlte Luft abgeführt und über den Warmluftausgang 13 wird die Luft abgeführt, auf welche die thermische Energie der abgekühlten Luft übertragen worden ist. Bei dem Kaltluftausgang 14 ist hier auch angedeutet, dass es sich um einen auseinanderziehbaren Schlauch handelt, der bei Bedarf in der Länge verändert werden kann.

An den einen Eingang 3 und die zwei Ausgänge ist hier jeweils ein Schlauch (alternativ: Rohr) 100 zum Führen der Luft angeschlossen. Dies geschieht hier über eine magnetische Verbindung. So werden beispielsweise magnetische und metallische Ringe miteinander kombiniert. Diese Art der Kontaktierung ist dabei derartig realisiert, dass sich zwischen dem Eingang oder Ausgang und dem Schlauch eine Zusatzkomponenten 101 befindet. Dies ist hier für den Lufteingang 3 zu sehen, an den sich z. B. ein Filter als Zusatzkomponente 101 schließt und dann ein Schlauch 100. Durch die magnetische Verbindung lässt sich der Kontakt insbesondere ohne Werkzeug lösen.

Die zu kühlenden Luft verfügt in der Regel über Feuchtigkeit, die sich an kühlen Komponenten des Klimageräts 1 als Kondensat absetzt. Damit das Kondensat gut zu entfernen ist, ist ein Kondensatbehälter 5 vorhanden, der relativ zum Gehäuse 2 des Klimageräts 1 bewegt werden kann. Dadurch wird insbesondere ein Teil des Innenlebens des Klimageräts 1 so zugänglich gemacht, dass auch von Stellen im Gehäuse 2 die Feuchtigkeit zuverlässig entfernt werden kann. Alternativ lässt sich der Kondensatbehälter 5 aus dem Gehäuse 2 entfernen. Die zugänglichen Komponenten bzw. Teile des Geräts 1 sind dabei insbesondere besonders relevant dahingehend, dass eine sichere Trocknung bzw. Reinigung erfolgen kann.

Um den Transport des Klimageräts 1 zu vereinfachen, ist an der Oberseite ein Tragegriff 6 vorhanden, der vorzugsweise aus- bzw. einschwenkbar ist. Oberhalb des Tragegriffs 6 befindet sich eine Abdeckvorrichtung 7, die exemplarisch als Sitzfläche ausgestaltet ist. Die Abdeckvorrichtung 7 ist dabei über einen Magneten 8 fixiert. Auf der Seite befindet sich ein weiterer Magnet 8, der eine Befestigung der Abdeckvorrichtung 7 an der Seite erlaubt. In einer Ausgestaltung ist die gesamte Seite des Gehäuses magnetisch ausgeführt.

In dem dargestellten Ausführungsbeispiel ist entfernt von dem Klimagerät 1 ein Mikrophon 9 angeordnet, um die Lautstärke in der Umgebung zu ermitteln. Die gemessenen Signale werden daher - als Rohsignale oder zu. B. im Hinblick auf die Lautstärke verarbeitete Signale - der Steuereinheit 10 übermittelt. Die Steuereinheit 10 leitet daraus ab, ob es z. B. Nacht ist. Ausgehend von dieser Ermittlung einer Aussage über die Umgebungsbedingungen steuert die Steuereinheit 10 das Klimagerät 1 bzw. einzelne Komponenten des Klimageräts 1, sodass ein gewünschter Geräuschzustand erreicht wird. Wird also beispielsweise erkannt, dass die Umgebung eher still ist, so wird z. B. die Kompressorleistung heruntergesetzt. Die Leistung und damit die Geräuschkulisse wird somit an das Geräuschumfeld angepasst.

Das Klimagerät 1 benötigt für seine Temperierungstätigkeit elektrischen Strom, der ihm über eine Stromanschlussstelle 11 zur Verfügung steht. Damit das Betreiben von weiteren elektrischen Geräten möglich ist, ist die Stromanschlussstelle 11 mit einer integrierten Steckdose als Stromausgabeeinheit 12 durchgehend verbunden, was hier durch die durchgezogene Linie angedeutet ist. Somit erhält das Klimagerät 1 die notwendige elektrische Energie und es ist immer noch eine Spannungsquelle vorhanden.

Wie bereits ausgeführt, verfügt das Klimagerät 1 über einen Kühlluftausgang 14 und einen Warmluftausgang 13. Beide sind über eine Anschlusskomponente 15', 15" mit jeweils einer Seite 16', 16" des Gehäuses 2 und mit den Luftpfaden innerhalb des Gehäuses 2 verbunden. Die Anschlusskomponenten 15', 15" umfassen dabei in einer - hier nicht dargestellten - Variante einen jeweils größeren Abschnitt der Seiten 16', 16", sodass in einer Variante auch der Lufteingang 3 über eine der Anschlusskomponenten 15', 15" befestigt ist. Die Anschlusskomponenten 15', 15" sowie die jeweiligen Schnittstellen auf den beiden Seiten 16', 16" sind so ausgeführt, dass ein reversibler Wechsel zwischen den beiden Seiten 16', 16" möglich ist. Damit ist auch ein Umdrehen des Klimageräts 1 und somit ein Tausch zwischen Wärmen und Kühlen problemlos möglich.

Das Klimagerät 1 ist eine tragbare Einheit. Es verfügt somit über ein Gehäuse 2, das in sich abgeschlossen ist und das auch eine solche Stabilität aufweist, dass es ohne die Fixierung an einer Wand oder einem Dach sicher stehen bleibt. Das Gewicht ist auch derartig, dass es z. B. von einem Menschen getragen werden kann. Dieses mobile Klimagerät 1 ist weiterhin über einen Schlauch 100 mit einer Transporteinheit 17 verbunden. Insbesondere ist der Kühlluftausgang 14 mit dem Innenraum 18 der Transporteinheit 17 verbunden. Dies führt dazu, dass das Klimagerät 1 die Transporteinheit 17 kühlt, sodass darin beispielsweise Lebensmittel transportiert werden können. Die Schnittstelle der Transporteinheit 17 zur Kontaktierung mit dem Schlauch 100 ist dabei vorzugsweise möglichst einfach ausgestaltet und erlaubt nach dem Abkühlvorgang einen Verschluss, sodass die kühle Innenluft möglichst nicht entweichen kann. Die Transporteinheit 17 ist derartig dimensioniert, sodass das Klimagerät 1 aufgenommen und in der Transporteinheit 17 z. B. getragen werden kann. Für diesen Zweck ist hier ein Träger 17' der als Tasche ausgeführten Trägereinheit 17 angedeutet.

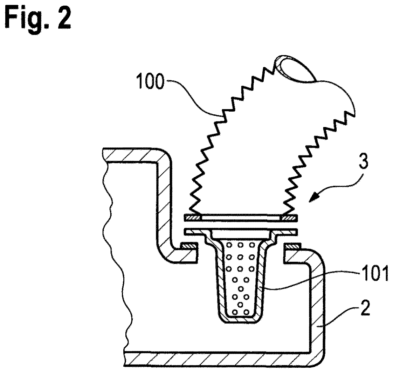

In der Fig. 2 ist dargestellt, wie als Beispiel an den Lufteingang 3 ein Schlauch 100 über einen magnetischen sowie einen metallischen Ring angebracht ist. Zwischen den beiden Komponenten ist eine Zusatzkomponente 101 eingeklemmt, bei der es sich hier um einen Luftfilter handelt.

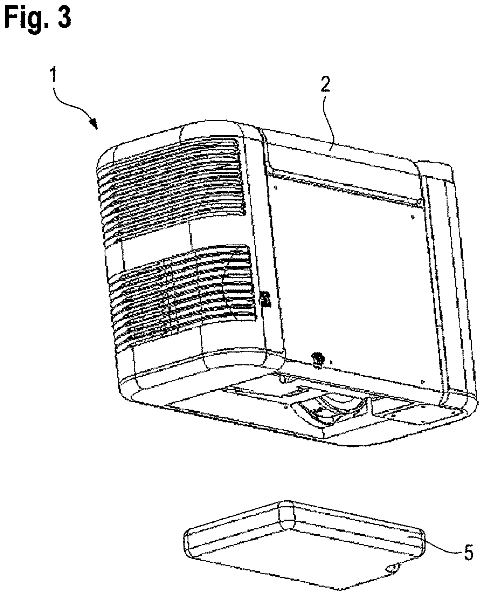

Die Fig. 3 zeigt einen Blick auf die Unterseite des Gehäuses 2 in dem Zustand, dass der Kondensatbehälter 5 entfernt worden ist. Der Kondensatbehälter 5 ist hier der Boden des Gehäuses 2, sodass die Entfernung des Behälters 5 es erlaubt, an alle der Unterseite zugewandten Komponenten des Klimageräts 1 zu gelangen und sie zu reinigen bzw. zu trockenen.

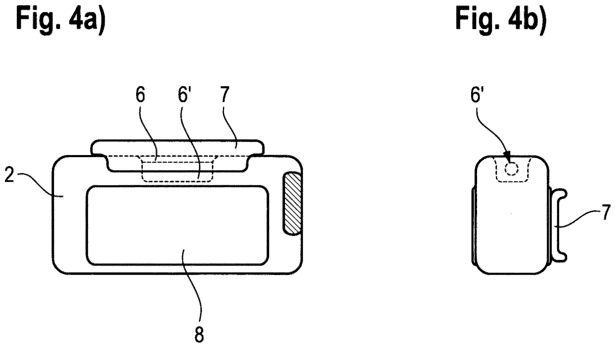

In der Fig. 4 a) ist gezeigt, wie sich die als Sitzfläche ausgestaltete Abdeckvorrichtung 7 auf der Oberseite des Gehäuses 2 und damit auch oberhalb des eingeklappten Tragegriffs 6 befindet. Der Tragegriff 6 befindet sich hier insbesondere in einer Mulde 6' des Gehäuses 2. In der Fig. 4 b) ist die Abdeckvorrichtung 7 unter Anwendung der Magnetkraft (hier realisiert durch einen magnetischen Abschnitt 8) an einer Seite des Gehäuses 2 reversibel fixiert. Damit ist der Tragegriff 6 in der Vertiefung 6' zugänglich.

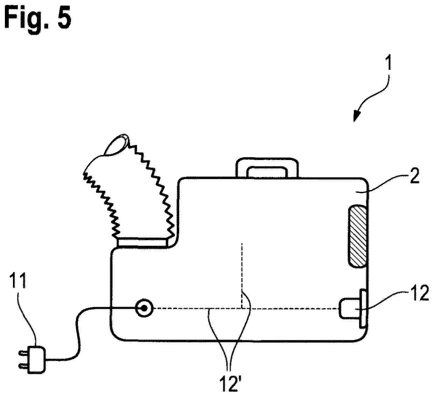

Die Fig. 5 zeigt eine elektrische Besonderheit des Klimageräts 1. Die Stromversorgung erfolgt über die Stromanschlussstelle 11, die hier als Gerätestecker ausgestaltet ist. Weiterhin ist eine integrierte Steckdose als Stromausgabeeinheit 12 vorhanden, über die elektrischen Geräten elektrische Spannung zur Verfügung gestellt werden kann. Innerhalb des Klimageräts 1 und damit auch innerhalb des Gehäuses 2 sind elektrische Kontaktierungen 12' vorgesehen, die die Stromanschlusstelle 11 und die Stromausgabeeinheit 12 sowie die einzelnen elektronischen Komponenten des Klimageräts 1 elektrisch miteinander verbinden.

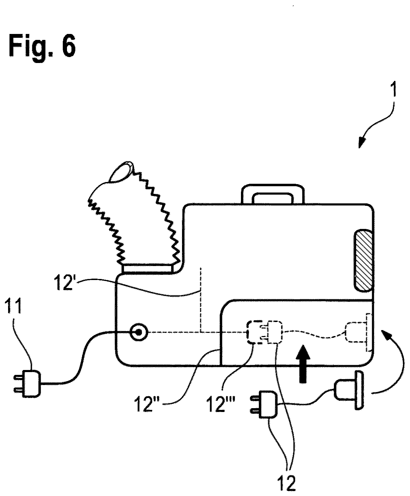

In der Ausgestaltung der Fig. 6, die eine alternative Ausgestaltung zur Fig. 5 ist, ist die Stromausgabeeinheit 12 über einen nachrüstbaren Stecker gegeben, der in eine hinter einer Klappe 12" im Gehäuse 2 befindlichen Dose 12‴ eingesteckt wird.

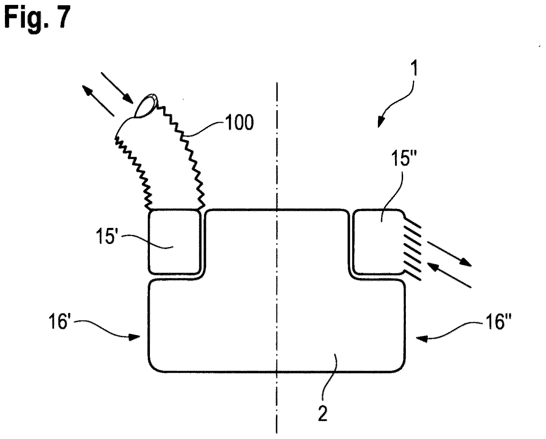

Die Fig. 7 zeigt, wie ein Drehen des Gehäuses 2 um 180° um die Hochachse (angedeutet durch die strich-punktierte Linie) ein Tauschen von Wärme- und Kühlfunktion bewirkt. Dafür sind die beiden Anschlusskomponenten 15', 15' mit beiden Seiten 16', 16" des Gehäuses 2 reversibel verbindbar. Da das Klimagerät 1 auf der einen Seite 16' die warme Luft und auf der anderen Seite 16" die kalte Luft ausgibt, wird durch das Drehen auch die Art der Luft geändert. Dies kann dabei insbesondere auch durch das Austauschen der Anschlusskomponenten 15', 15" erfolgen, die sich jeweils beide an beiden Seiten 16', 16" des Gehäuses 2 anbringen lassen. Zu sehen ist hier, dass eine Anschlusskomponente 15' mit einem Schlauch 100 verbunden ist. In einer alternativen Ausgestaltung umfasst die Anschlusskomponente 15' den Schlauch 100. Die andere Anschlusskomponente 15" ist in Lamellenform ausgeführt und erlaubt somit auch direkt das Ausblasen der Luft. Durch die Pfeile ist jeweils angedeutet, dass sich die Luft je nach Anwendung in beide Richtungen bewegen kann. Sie wird also einmal angesogen und einmal ausgestoßen - in Abhängigkeit vom Bedienzustand des Klimageräts und/oder in Abhängigkeit davon, auf welcher Seite 16', 16" sich welche Anschlusskomponente 15', 15" befindet.

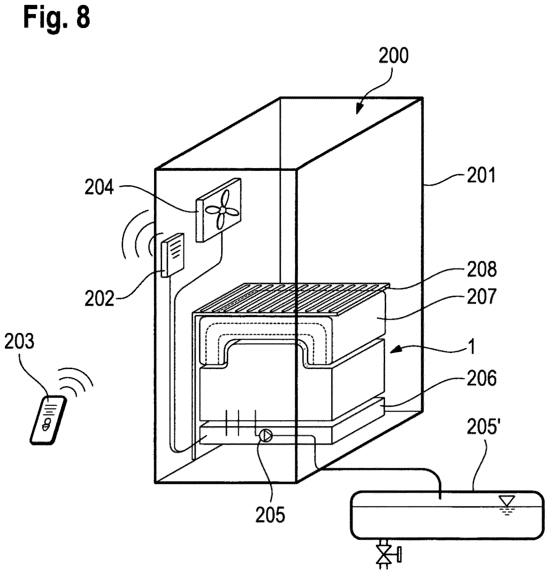

Die Fig. 8 schließlich zeigt eine Anordnung mit einer Umfassungsstruktur 201, die einen Trockenraum 200 umschließt. Die Umfassungsstruktur 201 weist hier mehrere WandElemente auf. In dem Trockenraum 200 ist ein Klimagerät 1 nach einem der obigen Ausgestaltungen eingebracht und dient der Trocknung der Luft.

Werden somit feuchte Objekte in den Trocknungsraum 200 eingebracht, so werden diese durch das Klimagerät 1 getrocknet. In dem Trocknungsraum 200 befindet sich ein Feuchtigkeitssensor 202, der mit einem mobilen Endgerät 203 verbunden ist. Weiterhin sind ein Umluftgebläse 204 und eine Kondensatpumpe 205 vorhanden, die mit dem Abwassertank 205' des Fahrzeugs verbunden ist, in dem sich die Anordnung befindet. Unterhalb des Klimageräts 1 befindet sich weiterhin eine Schnittstelle 206 für die elektrische Kontaktierung. Oberhalb des Klimageräts 1 sind ein Formteil mit einem Luftkanal 207 und eine Schalldämmung 208 vorhanden.

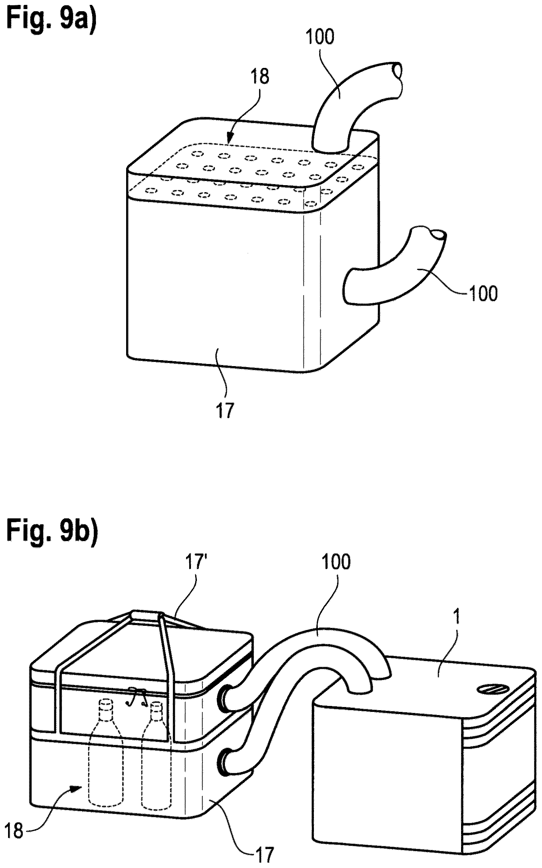

Die Fig. 9 zeigt zwei Ausgestaltungen der Transporteinheit 17. In der Fig. 9 a) ist zu erkennen, dass die Transporteinheit 17 mit zwei Schläuchen 100 für das Zu- und Abführen der temperierten Luft verbunden ist. Die Oberseite der Transporteinheit 17 ist hier doppelwandig ausgeführt. Die Außenseite ist dabei nur mit dem Schlauch 100 verbunden. Die Innenseite des Deckels ist mit mehreren Aussparungen versehen, durch die die temperierte Luft geführt wird. In der Fig. 9 b) ist dargestellt, wie die Transporteinheit 17 über zwei Schläuche 100 mit dem Klimagerät 1 gekoppelt ist. Die Transporteinheit 17 verfügt dabei über eine Trägerkonstruktion 17'. Angedeutet ist, dass sich in dem Innenraum 18, der durch das Klimagerät 1 temperiert wird, Flaschen als zu kühlende Objekte befinden.

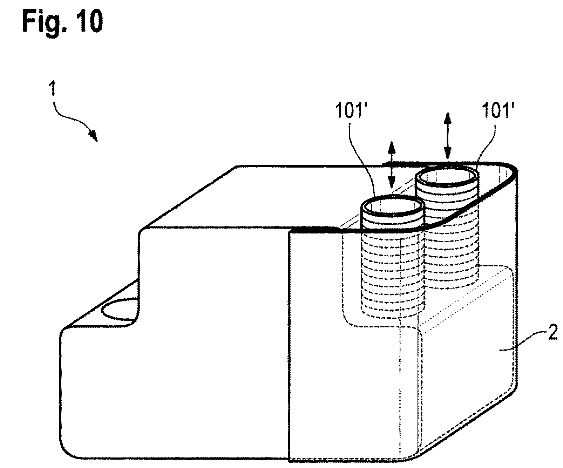

In der Fig. 10 ist ein Klimagerät 1 dargestellt, welches über integrierte und längenveränderlich Schläuche 101 verfügt. Die Schläuche 101' dienen dem Zu- bzw. Abführen von Luft. Die Längenveränderlichkeit ist dabei durch die Doppelpfeile angedeutet. Dargestellt ist der Ruhezustand, in welchem das Klimagerät 2 also nicht verwendet wird. In diesem Zustand befinden sich die Schläuche 101' in einer Ruhelage und haben damit auch die kleinste Längenerstreckung. Zu erkennen ist, dass sich die beiden Schläuche 101' auf einem seitlichen Absatz des Gehäuses 2 befinden. Dabei sind die Tiefe des Gehäuseabsatzes und die Länge der Schläuche 101' im Ruhezustand so aufeinander abgeglichen, dass die Schläuche 100' sich innerhalb der Außenkontur des Gehäuses 2 befinden und somit nicht über die - hier angedeutete - Außenkontur hinausragen. Damit lässt sich das Klimagerät 1 als Ganzes einfach verstauen oder auch transportieren.

## Patentansprüche

1. Tragbares Klimagerät (1) zum Temperieren von Luft mit einer Transporteinheit (17),
wobei das Klimagerät (1) mindestens ein Gehäuse (2) mit einem Lufteingang (3) und einem Luftausgang (4) aufweist,
wobei das Klimagerät (1) derartig ausgestaltet ist, dass es von dem Lufteingang (3) zu dem Luftausgang (4) geförderte Luft temperiert,
wobei der Luftausgang (4) mit der Transporteinheit (17) reversibel verbindbar ist,
wobei die Transporteinheit (17) thermisch isoliert ist,
wobei die Transporteinheit (17) einen Innenraum (18) umschließt,
wobei der Innenraum (18) der Transporteinheit (17) durch von dem Klimagerät (1) temperierte Luft temperierbar ist, und
wobei die Transporteinheit (17) und das Klimagerät (1) derartig ausgestaltet und aufeinander abgestimmt sind, dass das Klimagerät (1) reversibel in die Transporteinheit (17) einbringbar ist,
**dadurch gekennzeichnet,**
**dass** die Transporteinheit (17) eine Tasche ist, und
**dass** die Transporteinheit (17) über eine Trägerkonstruktion (17') in Form eines Trägers verfügt.

2. Klimagerät (1) mit Transporteinheit (17) nach Anspruch 1,
wobei der Lufteingang (3) des Klimageräts (1) mit der Transporteinheit (17) reversibel verbindbar ist,
wobei die Transporteinheit (17) mit zwei Schläuchen (100) für das Zu- und Abführen von Luft - vorzugsweise magnetisch - verbindbar ist, und
wobei der Lufteingang (3) des Klimageräts (1) und/oder der Luftausgang (4) des Klimageräts (1) mit einem Schlauch (100) - vorzugsweise magnetisch - lösbar verbindbar sind/ist.

3. Klimagerät (1) mit Transporteinheit (17) nach Anspruch 1 oder 2,
wobei die Transporteinheit (17) über eine Komponente verfügt,
wobei die Komponente als Deckel, Seite oder Boden dient,
wobei die Komponente den Innenraum (18) der Transporteinheit (17) umfasst,
wobei die Komponente zumindest teilweise doppelwandig ausgeführt ist,
wobei die Komponente über Öffnungen zum Innenraum (18) der Transporteinheit (17) verfügt, und
wobei die Komponente mit einem Schlauch (100) verbindbar ist.

## Claims

1. A portable air conditioner (1) for controlling the temperature of air, comprising a transport unit (17),
wherein the air conditioner (1) has at least one housing (2) having an air inlet (3) and an air outlet (4),
wherein the air conditioner (1) is configured so as to control the temperature of air conveyed from the air inlet (3) to the air outlet (4),
wherein the air outlet (4) is adapted to be reversibly connected to the transport unit (17),
wherein the transport unit (17) is thermally insulated,
wherein the transport unit (17) encloses an interior space (18),
wherein the interior space (18) of the transport unit (17) is adapted to be temperature-controlled by air that is temperature-controlled by the air conditioner (1), and
wherein the transport unit (17) and the air conditioner (1) are configured and adjusted to each other such that the air conditioner (1) is adapted to be reversibly inserted into the transport unit (17),
**characterized in that**
the transport unit (17) is a bag, and
**in that** the transport unit (17) has a carrier structure (17') in the form of a carrier.

2. The air conditioner (1) comprising a transport unit (17) according to claim 1,
wherein the air inlet (3) of the air conditioner (1) is adapted to be reversibly connected to the transport unit (17),
wherein the transport unit (17) is adapted to be connected - preferably magnetically - to two hoses (100) for the supply and removal of air, and
wherein the air inlet (3) of the air conditioner (1) and/or the air outlet (4) of the air conditioner (1) are/is adapted to be detachably connected - preferably magnetically - to a hose (100).

3. The air conditioner (1) comprising a transport unit (17) according to claim 1 or 2,
wherein the transport unit (17) has a component,
wherein the component serves as a lid, a side or a bottom,
wherein the component comprises the interior space (18) of the transport unit (17),
wherein the component is configured to be at least partially double-walled,
wherein the component has openings to the interior space (18) of the transport unit (17), and
wherein the component is adapted to be connected to a hose (100).

## Revendications

1. Climatiseur portable (1) pour réguler la température de l'air, comprenant une unité de transport (17),
le climatiseur (1) présentant au moins un boîtier (2) qui comprend une entrée d'air (3) et une sortie d'air (4),
le climatiseur (1) étant réalisé de manière à réguler la température de l'air transportée de l'entrée d'air (3) à la sortie d'air (4),
la sortie d'air (4) étant apte à être reliée de manière réversible à l'unité de transport (17),
l'unité de transport (17) étant thermiquement isolée,
l'unité de transport (17) renfermant un espace intérieur (18),
l'espace intérieur (18) de l'unité de transport (17) étant apte à être régulé en température par de l'air dont la température est régulée par le climatiseur (1), et
l'unité de transport (17) et le climatiseur (1) étant réalisés et adaptés l'une à l'autre de telle sorte que le climatiseur (1) est apte à être inséré de manière réversible dans l'unité de transport (17),
**caractérisé en ce que**
l'unité de transport (17) est un sac, et
**en ce que** l'unité de transport (17) présente une structure de support (17') en forme de support.

2. Climatiseur (1) comprenant une unité de transport (17) selon la revendication 1,
l'entrée d'air (3) du climatiseur (1) étant apte à être reliée de manière réversible à l'unité de transport (17),
l'unité de transport (17) étant apte à être reliée - de préférence magnétiquement - à deux tuyaux (100) pour l'amenée et l'évacuation d'air, et
l'entrée d'air (3) du climatiseur (1) et/ou la sortie d'air (4) du climatiseur (1) étant apte(s) à être reliée(s) de manière détachable - de préférence magnétiquement - à un tuyau (100).

3. Climatiseur (1) comprenant une unité de transport (17) selon la revendication 1 ou 2,
l'unité de transport (17) présentant un composant,
le composant servant de couvercle, de côté ou de fond,
le composant comprenant l'espace intérieur (18) de l'unité de transport (17),
le composant étant réalisé, au moins partiellement, à double paroi,
le composant présentant des ouvertures vers l'espace intérieur (18) de l'unité de transport (17), et
le composant étant apte à être relié à un tuyau (100).
